(19) Europäisches Patentamt
European Patent Office
Office européen des brevets

(11) EP 0 675 921 B1

(12) EUROPEAN PATENT SPECIFICATION

(45) Date of publication and mention
of the grant of the patent:
**30.09.1998 Bulletin 1998/40**

(51) Int Cl.⁶: **C08L 3/02**, C08L 5/16,
C08K 5/15, C08K 5/07

(21) Application number: **94904471.3**

(22) Date of filing: **16.12.1993**

(86) International application number:
**PCT/US93/12280**

(87) International publication number:
**WO 94/14888 (07.07.1994 Gazette 1994/15)**

(54) **POLYACETAL RESIN COMPOSITION**

POLYACETALHARZZUSAMMENSETZUNG

COMPOSITION DE RESINE DE POLYACETAL

(84) Designated Contracting States:
**DE FR GB IT**

(30) Priority: **22.12.1992 JP 341949/92**

(43) Date of publication of application:
**11.10.1995 Bulletin 1995/41**

(73) Proprietor: **E.I. DU PONT DE NEMOURS AND
COMPANY
Wilmington Delaware 19898 (US)**

(72) Inventor: **SHINOHARA, Kenichi
4-6-19, Eda-Higashi Midori-ku
Kanagawa 223 (JP)**

(74) Representative: **Abitz, Walter, Dr.-Ing. et al
Patentanwälte Abitz & Partner,
Poschingerstrasse 6
81679 München (DE)**

(56) References cited:
**EP-A- 0 561 594       US-A- 5 177 129
US-A- 5 206 325**

**Description**

## BACKGROUND OF THE INVENTION

The present invention relates to a polyacetal resin composition, and articles molded therefrom, which has excellent heat stability and moldability during melt extrusion or melt injection molding and has a considerably reduced formaldehyde odor during mixing.

Polyacetal resin, which is prepared by polymerizing a starting material mainly comprising formaldehyde monomer or trioxane, which is a trimer of formaldehyde, exhibits excellent mechanical and physical properties, such as tensile strength, stiffness, and the like, as well as fatigue resistance, sliding resistance, chemical resistance, and the like. It is extensively used in mechanical parts, electronic parts, automotive parts, and the like. However, polyacetal resin at times may thermally degrade (thermal depolymerization) when exposed to high temperatures in the melt during molding steps, such as melt extrusion or melt injection molding. When such degradation occurs, formaldehyde gas, and consequently odor, may evolve. In addition, molded articles made from polyacetal may sometimes have formaldehyde accumulated thereon, thereby resulting in a problem of diminished product characteristics.

Several stabilization recipes have been reported for improving the thermal stability of molten polyacetal resin so as to suppress the formation of formaldehyde gas. For example, Japanese Patent Application Publication 47-71007, Japanese Patent Application Publication 43-14329, and Japanese Patent Application Publication 59-213752 disclose polyacetal compositions containing acrylamide derivatives as a stabilizer. U.S. Patent 4,766,168 discloses stabilizers comprising a hydroxyl-containing polymer and an oligomer. U.S. Patent 3,219,727 teaches improvement of heat stability by introducing vinyl polymers containing a variety of functional groups comprising amide and lactam groups.

While these recipes are effective for suppressing the decomposition of the polyacetal resin in the melt and in suppressing the formation of formaldehyde gas generation, they are poor in effectiveness in reducing the formation of formaldehyde gas which occurs gradually in the process in which the molded article solidifies and cools, so that the formaldehyde odor in products thereof remains at a high level, which is a cause for decreased work efficiency.

Thus, there is a demand for developing a technical means to reduce the formaldehyde odor that may occur during processing of a polyacetal resin, as well as that which may arise in articles molded from polyacetal resin, and to reduce the amount of formaldehyde gas formation which may occur slowly during the solidification and cooling of articles made from polyacetal resin.

An extensive study by the present inventors has led to the finding that the above problems can be solved by incorporating cyclodextrin into a polyacetal resin.

## DETAILED DESCRIPTION OF THE INVENTION

The present invention relates to a polyacetal resin composition which is comprised of a polyacetal resin and cyclodextrin or a mixture of cyclodextrin and other sugars, said composition having excellent moldability and resulting in molded articles having reduced formaldehyde odor.

More specifically, the present invention relates to a polyacetal resin composition comprising (a) 100 parts by weight of a polyacetal resin and (b) 0.05-40 parts by weight, per 100 parts by weight of the polyacetal resin, of cyclodextrin or a mixture of cyclodextrin with other sugars.

The polyacetal resin used in this invention is a polyacetal resin which has been commonly known as such heretofore, including polymers or copolymers of formaldehyde, a formaldehyde cyclic oligomer, trioxane, or tetraoxane, or acetaldehyde, propionaldehyde, or the like, or polymers obtained by copolymerizing such as aldehyde with a cyclic ether or cyclic acetal, such as ethylene oxide, propylene oxide, 1,3-dioxalane, or the like. The polyacetal resin is a linear polymer comprising $-(CH_2)_n$-O- main chain units (n is a natural number) and/or $-(CHR-O)-$ units (R is an alkyl group), with terminal groups thereof being either not protected or being protected with a radical selected from the group consisting of $-O-CO-CH_3$, $-OCH_3$, and $-O(CH_2)_n$-OH. The polyacetal resin has a number average molecular weight of about 10,000-100,000, preferably 20,000-70,000. Polyacetal resin which is used in this invention may optionally be compounded, if needed, within the range of not adversely affecting the present invention, with heat stabilizers, antioxidants, plasticizers, lubricants, fillers, colorants, and the like.

The cyclodextrin used this invention may be alpha-dextrin consisting of six alpha- $(1 \rightarrow 4)$ linkage-glucopyranose units, beta-dextrin consisting of seven of the same units, gamma-dextrin consisting of eight of the same units or a mixture of two or more of these, or else a mixture of these cyclodextrins with sugars in a manner similar to that of cyclodextrin itself. The objective of this invention can be reached also by using a mixture of these dextrins with sugars, since cyclodextrin, because of the way it is prepared, often contains a monosaccharide, or polysaccharide other than cyclodextrin, or a mixture thereof. Preferably, though not required, the cyclodextrin is of high purity *(i.e.,* free from acid impurities and metal pigments).

The amount of cyclodextrin added to the compositions of the present invention is 0.05-40 parts by weight, preferably 0.1-10 parts by weight, and most preferably 0.5-1.0 parts by weight, per 100 parts by weight of the polyacetal resin. The cyclodextrin may be added by any means of compounding. One preferred method of incorporation involves adding a powdery or granular cyclodextrin to polyacetal resin pellets or adding a cyclodextrin solution to polyacetal resin pellets to coat the pellet surface with cyclodextrin, followed by removing the solvent, with the cyclodextrin being incorporated in the above range, and thereby mixing the mixture of the polyacetal resin with the cyclodextrin in an extruder of injection molder. In addition, the cyclodextrin may be compounded into the polyacetal resin at the same time that additives, such as thermal stabilizers, antioxidants, fillers, etc., are compounded therein.

## EXAMPLES

The present invention is described by the examples that follow, together with comparative examples, wherein the examples of this invention are presented for explaining the present invention and should not be understood to be limiting the scope of this invention.

The polyacetal resins used in the Examples below were as follows: Delrin® 500NC10 and Delrin® 8501NC (hereafter polyacetal resin POM-1 and polyacetal resin POM-2, respectively), both of which are acetal homopolymers sold commercially by the DuPont Company.

The cyclodextrins used in the Examples below were beta-cyclodextrin, a product of Tokyo Kasei K.K., (hereafter ADD-1) and Toyodelin-P, a product of Asahi Foods K.K., (hereafter ADD-2).

Test procedures used were as follows:

Melt Heat Stability Test: Resin pellets, 2 g, were melted for 30 minutes at 250°C in a nitrogen atmosphere. The formaldehyde gas generated by the decomposition of the resin was introduced into a 4% aqueous sodium bisulfite solution, followed by titration with a 0.1 N hydrochloric acid (HCl). The amount of formaldehyde gas generated is expressed by the following formula:

$$\text{Amount of formaldehyde formed (\%)} = 30.03\ NV/S \times 100$$

wherein V was the amount of HCl, in ml, required for titrating after 30 minutes, N was the normality, in ml, of HCl, S was the amount of sample, in grams, and 30.03 was the molecular weight of formaldehyde.

Odor Test: 125 g of resin pellets or small molded caps having dimensions of 25 mm diameter, 20 mm height, and 3 mm wall thickness were sealed in a 500 ml polyethylene container. On the following day, and five days later, 60 ml of gas generated was removed by a syringe and was introduced into a formaldehyde gas metering device (Lion Company, Formaldehyde Meter Mark 11) to measure the gas concentration. The caps were molded using a Sumitomo Nestral 75 ton molding machine under the following conditions: 205°C barrel temperature setting, 80°C mold temperature setting, and 900 kg/cm$^2$ hold pressure.

## Example 1

POM-1 and POM-2, respectively, were mixed with 0.1% or 0.5% of ADD-1, melt mixed in a small extruder (Laboplastomil 30 C-50, D2025) at 200°C and 150 rpm and the resultant resin was pelletized. The pellets were evaluated by the Melt Heat Stability Test and the Odor Test. Comparative Examples were those obtained by processing similarly POM-1 and POM-2 without ADD-1. The results of evaluation are listed in Tables 1, 2, and 3, below.

Table 1

| Samples | Evaluation of Melt Heat Stability Test |
|---|---|
| | Amount of Formaldehyde Generated (%) |
| POM-1 | 0.35 |
| POM-2 | 0.18 |
| POM-1 + ADD-10.1% | 0.21 |
| POM-2 + ADD-10.1% | 0.12 |
| POM-1 + ADD-1 0.5% | 0.17 |
| POM-2 + ADD-1 0.5% | 0.11 |

Table 2

| Samples | Evaluation of Odor Test (Resin Pellets) | |
| --- | --- | --- |
| | Next Day (units: ppm) | Five Days Later (units: ppm) |
| POM-1 | 50 | 45 |
| POM-2 | 42 | 40 |
| POM-1 + ADD-1 0.1% | 30 | 26 |
| POM-2 + ADD-10.1% | 28 | 24 |
| POM-1 + ADD-1 0.5% | 25 | 23 |
| POM-2 + ADD-1 0.5% | 22 | 19 |

Table 3

| Samples | Evaluation of Odor Test (Molded Caps) | |
| --- | --- | --- |
| | Next Day | Five Days Later (units: ppm) |
| POM-1 | 55 | 54 |
| POM-2 | 37 | 36 |
| POM-1 + ADD-1 0.1% | 34 | 23 |
| POM-2 + ADD-1 0.1% | 26 | 20 |
| POM-1 + ADD-1 0.5% | 22 | 19 |
| POM-2 + ADD-1 0.5% | 19 | 17 |

Tables 1, 2, and 3 demonstrate that the examples using cyclodextrin were able to suppress the formaldehyde odors in resin pellets and molded caps without severely adversely affecting the melt stability of the resins.

**Example 2**

Pellet form resin compositions were obtained by adding ADD-2 in amounts described in Table 4 below, to POM-2 and mixing in a 35 mm twin screw extruder (Toshiba Company) at a resin temperature of 205°C and a rate of 30 kg/hr. The resultant resin pellets were evaluated by the Odor Test. The comparative examples were obtained by processing similarly POM-2 alone. The results of evaluation are listed in the Table 4, below.

Table 4

| Samples | Evaluation of Odor Test (Resin Pellets) | |
| --- | --- | --- |
| | Next Day (units: ppm) | Four Days Later (units: ppm) |
| POM-2 | 39.2 | 48.8 |
| POM-2 + ADD-2 0.5% | 25.8 | 33.4 |
| POM-2 + ADD-2 1.5% | 12.7 | 13.5 |
| POM-2 + ADD-2 3.5% | 7.7 | 5.8 |
| POM-2 + ADD-2 7.5% | 5.1 | 7.7 |

Table 4 shows that the cyclodextrin reduced the formaldehyde odor of the acetal resin.

## Claims

### Claims for the following Contracting States : FR, IT

1. A polyacetal resin composition comprised of

   (a) 100 parts by weight of a polyacetal resin and
   (b) 0.5-40 parts by weight, per 100 parts by weight of the polyacetal resin, of a cyclodextrin or a mixture of cyclodextrin with at least one other sugar.

2. The composition of Claim 1 wherein the polyacetal resin is an acetal homopolymer.

3. The composition of Claim 1 wherein the polyacetal resin is an acetal copolymer.

4. The composition of Claim 1 wherein the cyclodetrin is selected from the group consisting of alpha-dextrin, beta-dextrin, gamma-dextrin, and mixtures thereof.

5. The composition of Claim 1 wherein the other sugar is selected from the group consisting of a monosaccharide, a polysaccharide other than cyclodextrin, and mixtures thereof.

6. The composition of Claim 1 further containing at least one compound selected from the group consisting of thermal stabilizers, antioxidants, plasticizers, lubricants, fillers, and colorants.

### Claims for the following Contracting States : DE, GB

1. A polyacetal resin composition comprised of

   (a) 100 parts by weight of a polyacetal resin and
   (b) 0.5-40 parts by weight, per 100 parts by weight of the polyacetal resin, of a mixture of a cyclodextrin with at least one other sugar, the other sugar being selected from the group consisting of a monosaccharide, a polysaccharide other than cyclodextrin, and mixtures thereof.

2. The composition of Claim 1 wherein the polyacetal resin is an acetal homopolymer.

3. The composition of Claim 1 wherein the polyacetal resin is an acetal copolymer.

4. The composition of Claim 1 wherein the cyclodextrin is selected from the group consisting of alpha-dextrin, beta-dextrin, gamma-dextrin, and mixtures thereof.

5. The composition of Claim 1 further containing at least one compound selected from the group consisting of thermal stabilizers, antioxidants, plasticizers, lubricants, fillers, and colorants.

## Patentansprüche

### Patentansprüche für folgende Vertragsstaaten : FR, IT

1. Polyacetalharzzusammensetzung, bestehend aus

   (a) 100 Gew.-Teilen eines Polyacetalharzes und
   (b) 0,5-40 Gew.-Teilen, pro 100 Gew.-Teile des Polyacetalharzes, eines Cyclodextrins oder einer Mischung von Cyclodextrin mit mindestens einem anderen Zucker.

2. Zusammensetzung nach Anspruch 1, bei welcher das Polyacetalharz ein Acetalhomopolymeres ist.

3. Zusammensetzung nach Anspruch 1, bei welcher das Polyacetalharz ein Acetalcopolymeres ist.

4. Zusammensetzung nach Anspruch 1, bei welcher das Cyclodextrin ausgewählt ist aus der Gruppe bestehend aus alpha-Dextrin, beta-Dextrin, gamma-Dextrin und Mischungen von diesen.

5. Zusammensetzung nach Anspruch 1, bei welcher der andere Zucker ausgewählt ist aus der Gruppe bestehend aus einem Monosaccharid, einem von Cyclodextrin verschiedenen Polysaccharid und Mischungen von diesen.

6. Zusammensetzung nach Anspruch 1, welche zusätzlich wenigstens eine Verbindung, ausgewählt aus der Gruppe bestehend aus thermischen Stabilisatoren, Antioxidantien, Plastifizierungsmitteln, Schmiermitteln, Füllstoffen und Färbemitteln, enthält.

**Patentansprüche für folgende Vertragsstaaten : DE, GB**

1. Polyacetalharzzusammensetzung, bestehend aus

    (a) 100 Gew.-Teilen eines Polyacetalharzes und
    (b) 0,5-40 Gew.-Teilen, pro 100 Gew.-Teile des Polyacetalharzes, einer Mischung aus einem Cyclodextrin mit wenigstens einem anderen Zucker, wobei der andere Zucker ausgewählt ist aus der Gruppe bestehend aus einem Monosaccharid, einem von Cyclodextrin verschiedenen Polysaccharid und Mischungen von diesen.

2. Zusammensetzung nach Anspruch 1, bei welcher das Polyacetalharz ein Acetalhomopolymeres ist.

3. Zusammensetzung nach Anspruch 1, bei welcher das Polyacetalharz ein Acetalcopolymeres ist.

4. Zusammensetzung nach Anspruch 1, bei welcher das Cyclodextrin ausgewählt ist aus der Gruppe bestehend aus alpha-Dextrin, beta-Dextrin, gamma-Dextrin und Mischungen von diesen.

5. Zusammensetzung nach Anspruch 1, welche zusätzlich wenigstens eine Verbindung, ausgewählt aus der Gruppe bestehend aus thermischen Stabilisatoren, Antioxidantien, Plastifizierungsmitteln, Schmiermitteln, Füllstoffen und Färbemitteln, enthält.

**Revendications**

**Revendications pour les Etats contractants suivants : FR, IT**

1. Composition de résine polyacétalique, comprenant

    (a) 100 parties en poids d'une résine polyacétalique et

    (b) 0,5 à 40 parties en poids, pour 100 parties en poids de la résine polyacétalique, d'une cyclodextrine ou d'un mélange de cyclodextrine avec au moins un autre sucre.

2. Composition selon la revendication 1, dans laquelle la résine polyacétalique est un homopolymère d'acétal.

3. Composition selon la revendication 1, dans laquelle la résine polyacétalique est un copolymère d'acétal.

4. Composition selon la revendication 1, dans laquelle la cyclodextrine est choisie dans le groupe constitué par l'alpha-dextrine, la bêta-dextrine, la gamma-dextrine et des mélanges de celles-ci.

5. Composition selon la revendication 1, dans laquelle l'autre sucre est choisi dans le groupe constitué par un monosaccharide, un polysaccharide autre que la cyclodextrine, et des mélanges de ceux-ci.

6. Composition selon la revendication 1, contenant en outre au moins un composé choisi dans le groupe constitué par les stabilisants thermiques, les antioxydants, les plastifiants, les lubrifiants, les charges et les colorants.

**Revendications pour les Etats contractants suivants : DE, GB**

1. Composition de résine polyacétalique, comprenant

   (a) 100 parties en poids d'une résine polyacétalique et

   (b) 0,5 à 40 parties en poids, pour 100 parties en poids de la résine polyacétalique, d'un mélange d'une cyclodextrine avec au moins un autre sucre, l'autre sucre étant choisi dans le groupe constitué par un monosaccharide, un polysaccharide autre que la cyclodextrine, et des mélanges de ceux-ci.

2. Composition selon la revendication 1, dans laquelle la résine polyacétalique est un homopolymère d'acétal.

3. Composition selon la revendication 1, dans laquelle la résine polyacétalique est un copolymère d'acétal.

4. Composition selon la revendication 1, dans laquelle la cyclodextrine est choisie dans le groupe constitué par l'alpha-dextrine, la bêta-dextrine, la gamma-dextrine et des mélanges de celles-ci.

5. Composition selon la revendication 1, contenant en outre au moins un composé choisi dans le groupe constitué par les stabilisants thermiques, les antioxydants, les plastifiants, les lubrifiants, les charges et les colorants.